# EUROPÄISCHE PATENTSCHRIFT

(11) **EP 0 231 840 B1**
(45) Veröffentlichungstag und Bekanntmachung des Hinweises auf die Patenterteilung: **07.04.1993**
(21) Anmeldenummer: 87100983.3
(22) Anmeldetag: 24.01.1987
(51) Int. Cl.: H02J 3/38

(54) **Verfahren zum dauernden Parallellauf eines Synchronwellengenerators mit mindestens einem Dieselgenerator eines Hilfsdieselaggregates**
Method for the continuous operation of a synchronous generator in parallel with at least one diesel generator of an auxiliary diesel aggregate
Procédé pour le fonctionnement en parallèle permanent d'un générateur synchrone avec au moins un générateur diesel d'un groupe diesel auxiliaire

(30) Priorität: 06.02.1986 DE 3603600
(43) Veröffentlichungstag der Anmeldung: 12.08.1987
(73) Patentinhaber: STN Systemtechnik Nord GmbH, D-28012 Bremen (DE)
(72) Erfinder: Kranert, Klaus, Dr.-Ing., D-2000 Hamburg 56 (DE); Knirsch, Hermann, Dipl.-Ing., D-2000 Hamburg 63 (DE); Helwich, Peter-Jürgen, Ing.-grad., D-2000 Hamburg 73 (DE)

(56) Entgegenhaltungen:
- EP-A- 0 046 530

## Beschreibung

Die Erfindung betrifft ein Verfahren gemäß dem Oberbegriff von Anspruch 1.

Bei der Bordnetzversorgung auf Schiffen mit Verstellpropellern wird ein dauernder Parallellauf eines Synchronwellengenerators mit einem oder mehreren Dieselgeneratoren von Hilfsdieselaggregaten angestrebt. Dieses Ziel kann z.B. mittels frequenzentkoppelter Wellengeneratoren erreicht werden, was jedoch einen Zwischenkreisumrichter erforderlich macht (EP-A-0046 530). Im allgemeinen ist ein derartiger Umrichter für Verstellpropellerschiffe aus Kostengründen nicht verwendbar. Es sind deshalb bisher Versuche mit Dieselgeneratoren mit mechanischen Drehzahlreglern und Parallellauf durch Fahren auf den Diesel-Statik-Kurven durchgeführt worden, die jedoch zu Instabilitäten führten und nach verhältnismäßig kurzer Zeit abgebrochen werden mußten.

Der Erfindung liegt daher die Aufgabe zugrunde, ein Verfahren zu schaffen, durch das der eingangs beschriebene Parallellauf auch bei Drehzahländerungen der Hauptmaschine durch Störmomentenstöße im Seegang oder beim Ruderlegen einwandfrei ermöglicht wird.

Die Aufgabe wird erfindungsgemäß durch die kennzeichnenden Verfahrensmerkmale des Anspruchs 1 gelöst.

Ausgestaltungen der Erfindung sind in den Unteransprüchen 4 bis 9 beschrieben.

Eine Schaltungsanordnung zur Bildung eines anteiligen Sollwertes für den Synchronwellengenerator und den Dieselgenerator zur Durchführung des Verfahrens nach Anspruch 1 ist im Anspruch 10 beansprucht. Ausgestaltungen dieser Schaltungsanordnung sind in den Unteransprüchen 11 und 12 beschrieben.

Vorteilhafterweise wird mit der Erfindung der Parallellauf bis zu extremen Drehzahlschwankungen der Hauptmaschine infolge von Seegang und Ruderlegen gestattet. Von Vorteil ist auch, daß bisherige überdimensionierte Synchronwellengeneratoren kleiner ausgeführt werden können, da Lastspitzen durch Parallellauf mittels des Hilfsdieselaggregates abgefahren werden. Dies führt zu geringeren Investitionskosten und einem verbesserten Wirkungsgrad durch höhere Auslastung im Normalbetrieb. Es wird möglich, daß der Synchronwellengenerator Energie für die Höchstfahrt des Schiffes vom Bordnetz auf die Propellerwelle aufbringt. Somit kann auch die Hauptmaschine kleiner ausgeführt werden, was ebenfalls zu Investitionseinsparungen führt. Die Erfindung ist vorzugsweise für Schiffe anwendbar, die nur für kurze Zeiten mit Vollast fahren müssen, wie beispielsweise Fahrgastschiffe, Fähren, Rettungsschiffe usw..

In der Zeichnung ist ein Ausführungsbeispiel zur Durchführung des erfindungsgemäßen Verfahrens dargestellt, und zwar zeigen:
- Figur 1: ein Blockschaltbild einer Gesamtanlage, und
- Figur 2: eine Schaltungsanordnung zur Bildung eines anteiligen Sollwertes für einen Sychronwellengenerator und zwei Dieselgeneratoren.

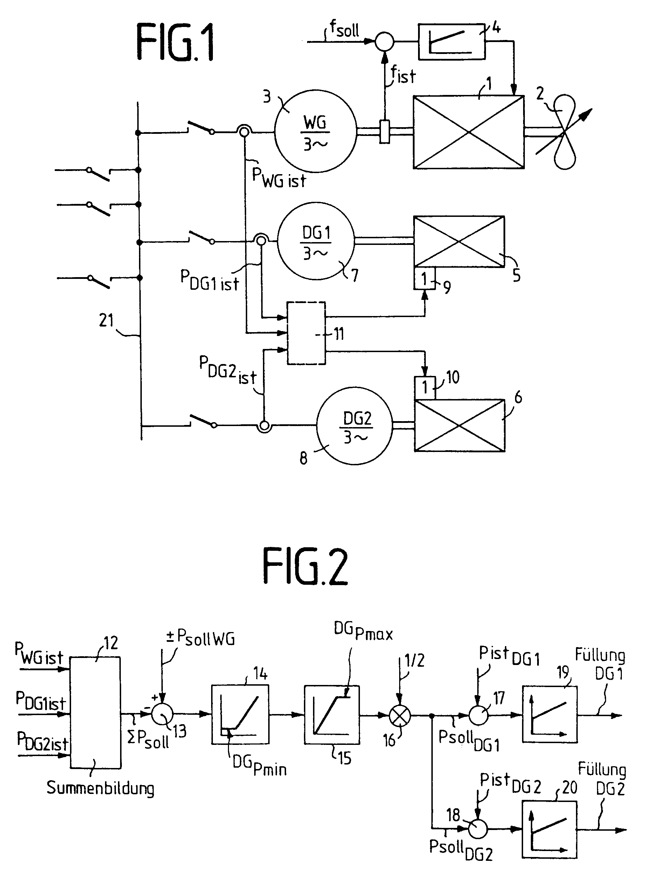

Gemäß Figur 1 treibt ein als Hauptmaschine 1 wirkendes Dieselaggregat einen Verstellpropeller 2 und einen Synchronwellengenerator 3 an, der seine elektrische Energie über einen nicht näher bezeichneten Schalter an das Bordnetz 21 eines zeichnerisch nicht dargestellten Schiffes abgibt. Die Hauptmaschine 1 ist mit einer hochdynamischen Drehzahlregelungseinrichtung 4 ausgerüstet, die beispielsweise elektronisch, elektro-pneumatisch oder elektro-hydraulisch arbeiten kann. Parallel zu der Hauptmaschine 1 und dem Synchronwellengenerator 3 sind zwei Hilfsdieselaggregate angeordnet, die jeweils einen Hilfsdiesel 5 bzw. 6 und einen Dieselgenerator 7 bzw. 8 aufweisen. Auch diese Dieselgeneratoren 7, 8 speisen die von ihnen erzeugte elektrische Energie über nicht näher bezeichnete Schalter in das Bordnetz 21 ein. Beide Hilfsdiesel 5 und 6 weisen jeweils einen Füllungssteller 9 bzw. 10 auf, denen anteilige Sollwertstellsignale von einer Schaltungseinrichtung 11 zugeführt werden. Diese Schaltungsanordnung ist aus Figur 2 ersichtlich.

Die Schaltungsanordnung aus Figur 2 weist ein Summenbildungsglied 12 zur Bildung der Summenwirkleistung Σ Pₛₒₗₗ des Bordnetzes 21 aus den Istwerten der Wirkleistungen des Synchronwellengenerators 3/P_{WGist} und der Dieselgeneratoren 7/P_{DG1 ist} bzw. 8/P_{DG2 ist} auf. Dem Summenbildungsglied 12 ist eine Einrichtung 13 zur positiven oder negativen Leistungsvorgabe für den Synchronwellengenerator 3 nachgeschaltet, an die sich ein Begrenzungsglied 14 für eine minimale Grenze und ein Begrenzungsglied 15 für eine maximale Grenze anschließen. Den Begrenzungsgliedern nachgeordnet ist eine Einrichtung 16 zur Bereitstellung eines anteiligen Sollwertes für die Füllungssteller 9 bzw. 10 der Hilfsdiesel 5 und 6. Für jedes Hilfsdieselaggregat ist der Einrichtung 16 eine Leistungsvergleichsvorrichtung 17 bzw. 18 sowie ein Verstärker 19 bzw. 20 nachgeschaltet.

Ein dauernder Parallellauf des Synchronwellengenerators 3 mit mindestens einem der Dieselgeneratoren 7 oder 8 wird dadurch erreicht, daß mit der hochdynamischen Drehzahlregeleinrichtung 4 der Hauptmaschine 1 nach dem Synchronisieren des Synchronwellengenerators 3 mit dem Dieselgenerator 7 bzw. 8 die Frequenz des Bordnetzes 21 geregelt wird. Nach der Synchronisation des bzw. der Hilfsdieselaggregate mit dem Synchronwellengenerator 3 wird der Hilfsdiesel 5 bzw. 6 von Frequenz- auf Leistungsregelung umgeschaltet. Beim Parallellauf der Generatoren 3, 7 und 8 wird kontinuierlich die Summen-Wirkleistung von Wellen- und Dieselaggregat 3 bzw. 7 und 8 gemessen. Daraus wird ein anteiliger Sollwert unter Berücksichtung der Nennleistung der Aggregate für die Leistungs- resp. Füllungsregelung des bzw. der Hilfsdieselaggregate errechnet. Nach Synchronisation wird eine vorher bestehende Last-Störgrößenaufschaltung der Leistungsregelung des Hilfsdieselaggregates abgeschaltet.

Es ist möglich, daß in Abhängigkeit von einem Grenzwert der Drehzahl/Frequenzschwankungen der Hauptmaschine 1 oder der Lastschwankungen der Generatoren 3, 7 oder 8 ein die Trennung von Synchronwellengenerator 3 und den Dieselgeneratoren 7 bzw. 8 vorbereitendes Signal abgeleitet wird. Durch dieses Signal wird die Übernahme der Wirkleistung auf ein oder beide Hilfsdieselaggregate und eine zeitverzögerte Absetzung des Synchronwellengenerators 3 eingeleitet.

Es ist von Vorteil, bei Parallelbetrieb der Generatoren 3, 7 und 8 die Grenzwerte des Generatorschutzes für Über/Unterfrequenz, Rückleistung und Überstrom automatisch zu erweitern für ein periodisches zeitbegrenztes Übersichwingen. Dieses Überschwingen stört infolge seiner Zeitbegrenzung nicht.

Entsprechend einer positiven oder negativen Leistungsvorgabe für den Wellengenerator 3 mit Hilfe der Einrichtung 13 kann der Synchronwellengenerator 3 wahlweise Energie ins Bordnetz 21 abgeben oder an die Propellerwelle eines Hilfsdiesels 5 bzw. 6 liefern. Hierzu wird die Füllungssteuerung des bzw. der Hilfsdiesel 5 und 6 bei der Zuordnung der Sollwirkleistung für den Synchronwellengenerator 3 einen positiven oder negativen Leistungsanteil abziehen, wobei eine nicht zu überschreitende maximale Belastung des bzw. der Hilfsdiesel 5 und 6 Berücksichtung findet.

Das erfindungsgemäße Verfahren gestattet, daß bei extremen Drehmomentenstöraufschaltungen der Hauptfahranlage die Drehzahlkonstanz durch Ausregeln der Steigung des Verstellpropellers 2 verbessert werden kann. Durch Anheben und Absenken der Bordnetzfrequenz wird durch kinetische Energie der motorischen Verbraucher des Bordnetzes 21 ein dämpfendes Drehmoment für die Drehzahlschwankungen der Hauptmaschine 1 erreicht, so daß - gegenüber bekannten Lösungsvorschlägen - geringere Füllungsänderungen der Hauptmaschine 1 und damit zusätzlich eine Energieersparnis erreicht wird. Die Erkenntnis, daß Fahren des Bordnetzes 21 in Gleitwinkelfrequenz unproblematisch ist, kommt der angestrebten Lösung entgegen.

## Patentansprüche

1. Verfahren zum dauernden Parallellauf eines Synchronwellengenerators, der von einer Hauptantriebsmaschine angetrieben wird, mit mindestens einem Dieselgenerator eines Hilfsdieselaggregates mit oder ohne Frequenzstatik, mit Fest- oder Gleitfrequenz bei Inselnetzen, dadurch gekennzeichnet, daß die Hauptmaschine (1) mit einer hochdynamischen Drehzahlregelungseinrichtung (4) ausgerüstet wird, mit der nach dem Synchronisieren des Synchronwellengenerators (3) mit dem Dieselgenerator (7, 8) die Frequenz des Bordnetzes (21) geregelt wird, daß nach der Synchronisation des Hilfsdieselaggregates mit dem Wellengenerator (3) der Hilfdiesel (5, 6) von Frequenz- auf Leistungsregelung umgeschaltet wird, daß der Hilfsdiesel (5, 6) mit einem elektronischen, proportional gesteuerten Füllungssteller (9, 10) versehen wird, daß beim Parallellauf der Generatoren (3, 7, 8) kontinuierlich die Summen-Wirkleistung von Synchronwellen- und Dieselaggregat gemessen wird, daß daraus ein anteiliger Sollwert unter Berücksichtigung der Nennleistung der Aggregate für die Leistungs- resp. Füllungsregelung des Hilfsdieselaggregates errechnet wird, und daß nach Synchronisation eine vorher bestehende Last-Störgrößenaufschaltung der Leistungsregelung des Hilfsdieselaggregates abgeschaltet wird.

2. Verfahren nach Anspruch 1, gekennzeichnet durch die Verwendung einer elektronischen Drehzahlregelungseinrichtung (4).

3. Verfahren nach Anspruch 1, dadurch gekennzeichnet, daß eine elektro-hydraulische Drehzahleinrichtung (4) verwendet wird.

4. Verfahren nach Anspruch 1, dadurch gekennzeichnet, daß die Hauptmaschine (1) mit einer elektro-pneumatischen Drehzahlregelungseinrichtung (4) versehen wird.

5. Verfahren nach Anspruch 1, dadurch gekennzeichnet, daß in Abhängigkeit von einem Grenzwert der Drehzahl/Frequenzschwankungen der Hauptmaschine (1) oder der Lastschwingungen der Generatoren (3, 7, 8) ein die Trennung von Synchronwellen- und Dieselgeneratoren (3, 7, 8) vorbereitendes Signal abgeleitet wird.

6. Verfahren nach Anspruch 5, dadurch gekennzeichnet, daß durch das Signal die Übernahme der Wirkleistung auf das Hilfsdieselaggregat und eine zeitverzögerte Absetzung des Synchronwellengenerators (3) eingeleitet wird.

7. Verfahren nach Anspruch 1, 5 oder 6, dadurch gekennzeichnet, daß bei Parallelbetrieb der Generatoren (3, 7, 8) die Grenzwerte des Generatorschutzes für Über/Unterfrequenz, Rückleistung und Überstrom automatisch erweitert werden für ein periodisches, zeitbegrenztes Überschwingen.

8. Verfahren nach Anspruch 1, 5, 6 oder 7, dadurch gekennzeichnet, daß der Synchronwellengenerator (3) wahlweise Energie ins Bordnetz (21) abgibt oder an die Propellerwelle des Hilfsdiesels (5, 6) liefert, entsprechend einer positiven oder negativen Leistungsvorgabe für den Synchronwellengenerator (3), indem die Füllungssteuerung des Hilfsdiesels (5, 6) bei der Zuordnung der Sollwirkleistung für den Synchronwellengenerator (3) einen positiven oder negativen Leistungsanteil abzieht unter Berücksichtigung einer nicht zu überschreitenden maximalen Belastung des Hilfsdiesels (5, 6).

9. Verfahren nach einem der Ansprüche 1 bis 8, dadurch gekennzeichnet, daß bei extremen Drehmomentenstöraufschaltungen der Hauptmaschine die Drehzahlkonstanz durch Ausregeln der Steigung eines Verstellpropellers (2) verbessert wird.

10. Schaltungsanordnung zur Bildung eines anteiligen Sollwertes für einen Synchronwellengenerator und einen Dieselgenerator zur Durchführung des Verfahrens nach Anspruch 1, dadurch gekennzeichnet, daß ein Summenbildungsglied (12) zur Bildung der Summenwirkleistung (Σ Pₛₒₗₗ) des Bordnetzes (21) aus den Istwerten der Wirkleistungen des Synchronwellengenerators (3/P_{WGist}) und des Dieselgenerators (7/P_{DG1ist} bzw. 8/P_{DG2ist}) vorgesehen ist, daß sich dem Summenbildungsglied (12) eine Einrichtung (13) zur positiven oder negativen Leistungsvorgabe für den Synchronwellengenerator (3) anschließt, und daß dieser Einrichtung (13) eine Einrichtung (16) zur Bereitstellung eines anteiligen Sollwertes für den Füllungssteller (9 bzw. 10) des Hilfsdiesels (5 bzw. 6) des Dieselaggregates nachgeordnet ist.

11. Schaltungsanordnung nach Anspruch 10, gekennzeichnet durch die Anordnung von Begrenzungsgliedern (14, 15) zwischen der Einrichtung (13) zur positiven und negativen Leistungsvorgabe und der Einrichtung (16) zur Bereitstellung des anteiligen Sollwertes.

12. Schaltungsanordnung nach Anspruch 10 oder 11, dadurch gekennzeichnet, daß der Einrichtung (16) zur Bereitstellung eines anteiligen Sollwertes eine Leistungsvergleichsvorrichtung (17 bzw. 18) und ein Verstärker (19 bzw. 20) nachgeschaltet sind.

## Claims

1. A method of running a synchronous generator driven from the shaft of a main propulsion engine, continuously in parallel with at least one diesel generator of an auxiliary diesel unit with or without frequency droop and with fixed or floating frequency in the island network, characterized in that the main engine (1) is equipped with a highly dynamic r.p.m. control system (4) by which after synchronizing the shaft-driven synchronous generator (3) with the diesel generator (7, 8) the frequency of the ship network (21) is regulated, that after synchronization of the auxiliary diesel unit with the shaft-driven generator (3) the auxiliary diesel (5, 6) is switched over from frequency to power regulation, that the auxiliary diesel (5, 6) is provided with an electronic proportionally controlled fuel-injection regulating unit (9, 10), that during parallel running of the generators (3, 7, 8) the total active power from the shaft-driven and diesel units is measured continuously, that from that a proportional desired value, taking into consideration the rated powers of the units, is calculated for the regulation of the power or respectively the fuel-injection of the auxiliary diesel unit, and that after synchronization a previously existing load-disturbance variable compensation of the power regulation of the auxiliary diesel unit is switched off.

2. A method as in Claim 1, characterized by the employment of an electronic r.p.m. control system (4).

3. A method as in Claim 1, characterized in that an electrohydraulic r.p.m. system (4) is employed.

4. A method as in Claim 1, characterized in that the main engine (1) is provided with an electropneumatic r.p.m. control system (4).

5. A method as in Claim 1, characterized in that in dependence upon a limiting value of the r.p.m./frequency fluctuations of the main engine (1) or of the load oscillations of the generators (3, 7, 8) a signal is derived preparing the separation of the shaft-driven synchronous generator (3) from the diesel generator (7, 8).

6. A method as in Claim 5, characterized in that through the signal the takeover of the active power by the auxiliary diesel unit and a time-delayed relief of the shaft-driven synchronous generator (3) is started.

7. A method as in Claim 1, 5 or 6, characterized in that during parallel operation of the generators (3, 7, 8) the limiting values of the generator protection for over/under frequency, reverse power and overcurrent are automatically widened for a periodic overswing of limited duration.

8. A method as in Claim 1, 5, 6 or 7, characterized in that the shaft-driven synchronous generator (3) at option releases energy into the ship network (21) or delivers it to the propeller shaft of the auxiliary diesel (5, 6), to correspond with a positive or negative power target for the shaft-driven synchronous generator (3), by the fuel-injection control of the auxiliary diesel (5, 6) in association with the desired effective power for the shaft-driven synchronous generator (3), drawing off a positive or negative proportion of power whilst taking into consideration a maximum loading of the auxiliary diesel (5, 6) which is not to be exceeded.

9. A method as in one of the Claims 1 to 8, characterized in that in the case of extreme torque disturbance compensations of the main engine the r.p.m. constancy is improved by levelling the pitch of a controllable pitch propeller (2).

10. A circuit arrangement for the formation of a proportional desired value for a shaft-driven synchronous generator and a diesel generator for the performance of the method as in Claim 1, characterized in that a sum-formation member (12) is provided for forming the total effective power (ΣPₛₒₗₗ) of the ship network (21) from the actual values of the effective powers from the shaft-driven synchronous generator (3/P_{WGist}) and the diesel generator (7/P_{DG1ist} resp. 8/P_{DG2ist}), that a device (13) is connected to the sum-formation member (12), for the positive or negative power target for the shaft-driven synchronous generator (3), and that a device (16) is arranged after this device (13), for the preparation of a proportional desired value for the fuel-injection regulating unit (9 resp. 10) of the auxiliary diesel (5 resp. 6) of the diesel unit.

11. A circuit arrangement as in Claim 10, characterized by the arrangement of boundary members (14, 15) between the device (13) for the positive and negative power target and the device (16) for the preparation of the proportional desired value.

12. A circuit arrangement as in Claim 10 or 11, characterized in that a power comparator (17 resp. 18) and an amplifier (19 resp. 20) are connected after the device (16) for the preparation of a proportional desired value.

## Revendications

1. Procédé pour le fonctionnement permanent en parallèle d'un générateur synchrone entraîné par une machine d'entraînement principale, comportant au moins un générateur diesel d'un groupe de secours diesel avec ou sans statique de fréquence, avec fréquence fixe ou fréquence de glissement dans le cas de réseaux sous forme d'îlots, caractérisé en ce que la machine principale (1) est équipée d'un dispositif de régulation de vitesse (4) à dynamique élevée, par lequel la fréquence du réseau de bord (21) est réglée après la synchronisation du générateur synchrone (3) avec le générateur diesel (7, 8), et en ce que, après la synchronisation du groupe diesel de secours avec le générateur (3), le diesel de secours (5, 6) est commuté de la régulation de fréquence sur la régulation de puissance, en ce que le diesel de secours (5, 6) est équipé d'une admission électronique à disque (9, 10) à commande proportionnelle, en ce que pendant le fonctionnement en parallèle des générateurs (3, 7, 8) la somme des puissances effectives du générateur synchrone et du groupe diesel est mesurée en continu, en ce qu'à partir de cette mesure, il est calculé une valeur de consigne proportionnelle pour la régulation de puissance, et d'admission du groupe de secours diesel, qui prend en compte la puissance nominale de l'ensemble, et en ce qu'après la synchronisation, la compensation de perturbation de charge qui agissait auparavant sur la régulation de puissance du groupe de secours diesel est annulée.

2. Procédé selon la revendication 1, caractérisé en ce qu'il est utilisé un dispositif de régulation de vitesse électronique (4).

3. Procédé selon la revendication 1, caractérisé en ce qu'il est utilisé un dispositif de régulation de vitesse électro-hydraulique (4).

4. Procédé selon la revendication 1, caractérisé en ce que la machine principale (1) est équipée d'un dispositif de régulation de vitesse électro-pneumatique (4).

5. Procédé selon la revendication 1, caractérisé en ce qu'en fonction d'une valeur de seuil des variations de vitesse/fréquence de la machine principale (1), ou des variations de charge des générateurs (3, 7, 8), il est engendré un signal préparant la séparation du générateur synchrone et du générateur diesel (3, 7, 8).

6. Procédé selon la revendication 5, caractérisé en ce que ce signal engendre le transfert de la puissance effective sur le groupe diesel de secours, et une chute en puissance temporisée du générateur synchrone (3).

7. Procédé selon l'une quelconque des revendications 1, 5 ou 6, caractérisé en ce que, lors de la marche en parallèle des générateurs (3, 7, 8), les valeurs de seuil de protection contre une fréquence trop élevée ou trop basse, un retour de puissance et une surintensité du générateur, sont automatiquement augmentées pour un dépassement périodique limité dans le temps.

8. Procédé selon l'une quelconque des revendications 1, 5, 6 ou 7, caractérisé en ce que le générateur synchrone (3) délivre facultativement de l'énergie soit au réseau de bord (21) soit à l'arbre d'hélice du diesel de secours (5, 6), selon une consigne de puissance négative ou positive destinée au générateur synchrone (3), et ceci grâce à la commande d'admission du diesel de secours (5, 6) qui, par l'adjonction de la puissance effective théorique du générateur synchrone (3), prélève une proportion de puissance positive ou négative prenant en compte une charge maximale à ne pas dépasser pour le diesel de secours (5, 6).

9. Procédé selon l'une quelconque des revendications 1 à 8, caractérisé en ce que, en cas de compensations de perturbations de couples extrêmes de la machine principale, le maintien de la vitesse est amélioré en augmentant le réglage de l'hélice à pas variable (2).

10. Circuit de couplage pour la réalisation d'une valeur de consigne proportionnelle du générateur synchrone et du générateur diesel, destiné à l'exécution du procédé selon la revendication 1, caractérisé en ce qu'il est prévu un élément de totalisation (12) destiné à effectuer la somme de la puissance effective ( Σ P_{théorique}) du réseau de bord (21) à partir des valeurs réelles des puissances effectives du générateur synchrone (3/P_{WG eff.}) et du générateur diesel (7/P_{DGeff.} et/ou 8/P_{DG eff.}), en ce qu'un dispositif (13) fixant une consigne de puissance positive ou négative au générateur synchrone (3) est relié à l'élément de totalisation (12), et en ce qu'en aval de ce dispositif (13), il est prévu un dispositif (16), destiné à fournir une valeur théorique proportionnelle au disque d'admission (9 et/ou 10) du diesel de secours (5 et/ou 6) du groupe diesel.

11. Circuit de couplage selon la revendication 10, caractérisé en ce que des éléments de limitation (14, 15) sont installés entre le dispositif (13) de consigne de puissance positive ou négative, et le dispositif (16) destiné à fournir la valeur théorique proportionnelle.

12. Circuit de coupage selon l'une quelconque des revendications 10 ou 11, caractérisé en ce qu'un dispositif de comparaison (17 et/ou 18) et un amplificateur (19 et/ou 20) sont placés en aval du dispositif (16) destiné à fournir une valeur théorique proportionnelle.
